# EUROPEAN PATENT APPLICATION

(11) **EP 4 613 525 A1**
(43) Date of publication of application: **10.09.2025**
(21) Application number: 25159040.2
(22) Date of filing: 20.02.2025
(51) Int. Cl.: B60K 1/00, F16H 48/24, F16H 57/04, F16H 63/34, F16H 48/08, F16H 3/66, F16H 37/08

(54) **ELECTRIC DRIVE AXLE**

(30) Priority: 05.03.2024 IT 202400004849
(71) Applicant: FPT Industrial S.p.A., 10156 Torino (IT)
(72) Inventor: TESSITORE, Marco, 10156 Torino (IT); PESOLA, Fabio, 10156 Torino (IT); MANTOVAN, Alessandro, 10156 Torino (IT); FASOLO, Loris, 10156 Torino (IT); PIACENZA, Gianni, 10156 Torino (IT); CANTONE, Francesco, 10156 Torino (IT); SALICA, Marta, 10156 Torino (IT)
(74) Representative: Fiume, Orazio

(57) **Abstract**

Electric axle for an on-axis vehicle, comprising a casing, in which an electric machine is housed, comprising a tubular drive shaft having a first end and a second end opposite to the first, emerging with respect to a rotor of the electric machine, a reduction unit comprising an input port connectable in torque transmission to the drive shaft, arranged in an axial position with respect to the electric machine, in a position proximal to the first end, a differential at least partially nested in the reduction unit, a first and a second half-shaft coaxial with each other and operationally connected to said differential, wherein said first half-shaft is nested in the drive shaft, a further tubular shaft, operationally interposed between said drive shaft and said first half-shaft, wherein the further tubular shaft has a first end stably fixed to said first port of the reduction unit, and a second end, opposite to the first, operationally connectable with said drive shaft.

## Description

### FIELD OF THE INVENTION

The present invention relates to the field of vehicle axles, in particular to an electric axle and in particular, an axle of the type in which the rotor of the electric machine is coaxial with the half-shafts.

### STATE OF THE ART

In the field of propulsion electric axles, solutions called e-axles or e-beams are known, i.e. electric propulsion axles or bridges, in which the axle/bridge itself carries one or more electric machines configured to exchange torque with the axle half-shafts and therefore with the wheels, to supply or generate energy depending on the vehicle's usage conditions. In particular, solutions are widely available on the market that involve the use of electric machines in a so-called "on-axis" configuration where, i.e., the axis of the electric machine is coaxial with the axis of the axle/bridge half-shafts, and this configuration is particularly advantageous from the point of view of space occupancy. In fact, a bulky axle leads to a reduction in the vehicle load volume. Furthermore, due to the dimensional limits that may affect the axles, it is complicated to accommodate, among other things, additional components such as suspensions, braking system/wheel hubs. It is therefore necessary to resize the transmission connecting the electric machine to the wheels or the electric machine itself, thus decreasing, in fact, the power and performance available to the axle. Furthermore, due to the compactness that such solutions must have in order to accommodate other components on board the vehicle, it is difficult from a design point of view to identify compact construction solutions that at the same time have an arrangement of the axle components that improves performance and minimizes reliability problems that may arise during use.

### SUMMARY OF THE INVENTION

The present invention has the purpose of satisfying at least in part the needs indicated above, wherein this purpose is achieved by means of an electric axle for a vehicle according to claim 1.

According to the present invention, an electric axle is disclosed with a compact construction configuration and capable of providing an additional operating mode without increasing the overall dimensions of the axle. To achieve this result, an electric axle is presented comprising a casing, an electric machine arranged inside the casing, and a first and a second half-shaft coaxial with each other. The electric machine comprises a tubular drive shaft having a first end and a second end opposite to the first one, emerging with respect to a rotor of the electric machine. Advantageously, through this construction solution, it is possible to disconnect the electric machine from the axle, when the axle is driven, for example in a hybrid vehicle, in order to limit the losses due to eddy currents or excitation induced in the stator winding. Furthermore, the electric axle according to the present invention comprises a reduction unit preferably of the epicyclic type, more preferably of the "stepped" type also named "compound" having an input port, preferably defined by a sun gear, connectable for torque transmission to the drive shaft. This reduction unit is arranged in an axial position with respect to the electric machine, in particular in a position proximal to the first end of the drive shaft. The electric axle also comprises a differential at least partially nested in the reduction unit, the latter preferably having a planetary gear comprising at least one stepped satellite connected for torque transmission to the train carrier in turn connected to the differential box. The first and second half-shafts are coaxial with each other and are operationally connected to the differential, and the first half-shaft is nested in the drive shaft. Through this construction configuration, it is possible to transmit to the drive shaft a torque reduced with respect to that transmitted by the half-shafts, exploiting the torque reduction ratio of the reduction unit, output from the sun gear. According to the invention, the electric propulsion axle comprises a further tubular shaft, operatively interposed between the drive shaft and the first half-shaft, and in which such further tubular shaft has a first end stably fixed to the first port of the reduction unit, e.g. to the sun gear, and a second end, opposite to the first, operatively connectable to said drive shaft, e.g. by means of a clutch mechanism or equivalent joint, and thus interrupting the connection between the electric machine and the remaining components of the torque transmission of the axle.

The fact that the additional tubular shaft is interposed between the drive shaft and the half-shaft means that in at least one cross-section it is obtained that they are concentric. The term "nested" is used to clarify that a shaft is inserted into another shaft and is therefore coaxial and concentric with each other.

The dependent claims form an integral part of this description describing preferred variants of the invention.

### DESCRIPTION OF THE DRAWINGS

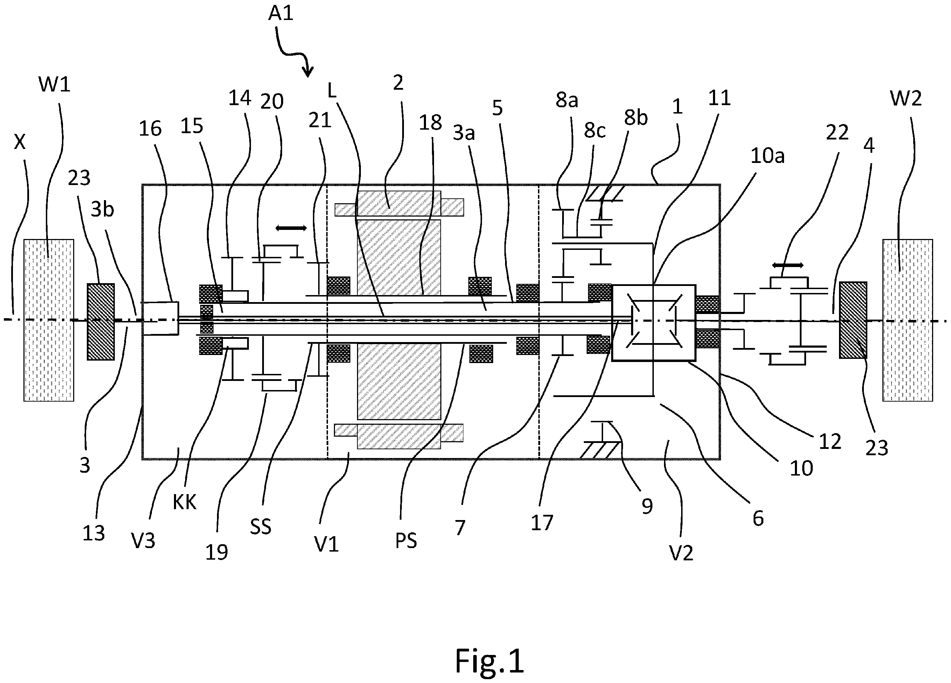

The construction and functional characteristics of the electric axle can be better understood from the detailed description that follows, in which reference is made to the attached Fig.1 which represents a preferred and non-limiting embodiment of the present invention.

### DETAILED DESCRIPTION OF THE INVENTION

According to a preferred embodiment of the present invention, Fig. 1 shows an electric axle A1 for a vehicle, comprising a casing 1, an electric machine 2 arranged inside the casing, and a first and a second half-axle 3, 4 arranged longitudinally at least partly inside the casing 1 and arranged coaxially with respect to an axis X. The half-axles 3, 4 protrude longitudinally from opposite sides with respect to the casing and in use the wheels W1, W2 of the vehicle are each connected to a respective half-axle. The electric machine 2 has a stator rigidly connected to the casing 1 and a rotor coaxial with respect to the axis X, so that on the basis of this construction configuration the electric axle can be defined as being of the 'on axle' type. The electric machine is arranged in a first housing compartment V1 inside the casing 1, and is electrically connected in use to an energy source, e.g. a battery pack (not shown) on board the vehicle, and is configured to exchange energy with it, in particular receiving it to generate a torque to provide propulsion to the wheels W1, W2, i.e. function as an electric motor, or to function in reverse, i.e. receive a torque transmitted by the wheels to generate electrical energy that is stored in the vehicle's battery, i.e. function as an electric generator. Furthermore, the electric axle A1 comprises a tubular drive shaft 18, arranged inside the crankcase 1 coaxially to the X axis, which is fixed to the rotor of the electric machine 2. In particular, this drive shaft 18 has a first end PS and a second end SS opposite to the first, both emerging with respect to the rotor of the electric machine, and the first half-axis 3 is nested longitudinally at least partially inside the drive shaft 18. The electric axle A also comprises an epicyclic reduction unit 6 with a stepped reduction ratio arranged in a second compartment V2 of the crankcase 1, axially adjacent to the first compartment V1, in an axial position with respect to the electric machine 2, and in particular in a position proximal to the first end PS. In particular, the epicyclic reduction gear unit 6 comprises an input port 7 operably connectable in torque transmission to the drive shaft 18, and wherein such input port is defined by a reduction gear sun gear arranged coaxially to the X-axis. Furthermore, the drive shaft 18 is rotationally supported by a pair of bearings mounted in a longitudinally opposed position with respect to the electric machine 2 within housings formed on internal walls of the crankcase 1 defining the first compartment V1. The epicyclic reduction gear unit 6 has a planetary gear comprising at least one stepped satellite 8 formed by a first wheel 8a and a second wheel 8b. In particular, each satellite, as known, comprises a first gear wheel 8a with a first diameter, and a second gear wheel 8b with a second diameter smaller than the first diameter of the first wheel, connected to each other coaxially by means of a shaft 8c parallel to the X axis. The first wheel 8a is connected in torque transmission to the sun gear 7. In this way, the first wheel 8a, which is larger, rotates the shaft 8c, which transmits the torque to the second gear wheel 8b, which is smaller.

Furthermore, the reduction unit comprises a ring gear 9 with internal teeth, coaxial to the X axis, rigidly constrained to the casing 1, and on which the second gear wheel 8b meshes. According to a further aspect of the present invention, the electric axle A1 comprises a differential 10 at least partially nested in the reduction unit, in particular between the planets of the reduction unit. The reduction unit 6 comprises a gear carrier 11 connected in torque transmission to the differential box in a manner known to those skilled in the art, and integral with an input port 10a of the differential. The shaft 8c is rotatably supported by the gear carrier by means of at least one bearing. The housing compartment V2 of the reduction unit 6 and the differential 10 is closed by a first flanged cover 12 positioned on the opposite side of the electric machine 2 with respect to the reduction unit 6 and the differential 10, and rigidly connected to the casing 1. The first and second half-shafts 3, 4 are connected in torque transmission to the differential in a known manner, e.g. with bevel gears, and the first flanged cover 12 is crossed by the second half-shaft 4 via a special opening. Furthermore, a bearing is provided in a proximal position to the hole of the first flanged cover to rotationally support the train carrier 11 and the differential 10. The first half-shaft 3 extends longitudinally from the differential 10 in the opposite direction to the second half-shaft 4, and in particular extends inside the drive shaft 18. The second end SS of the drive shaft is arranged in a third compartment V3 opposite to the second compartment V2 with respect to the electric machine 2. This third compartment is closed by a second flanged cover 13 rigidly fixed to the crankcase 1, and the first half-shaft passes through the flanged cover 13 through a special opening. Furthermore, a bearing is provided in the opening of the second flanged cover to support the first half-shaft 3. Furthermore, this axle comprises a further tubular shaft 5, operatively interposed between the drive shaft 18 and one of said first or second half-shafts, preferably the first half-shaft 3. This tubular shaft 5 has a first end protruding into the second compartment V2 stably fixed to the sun gear 7 of the reduction unit, and a second end, opposite to the first, operatively connectable to the drive shaft 18. A parking wheel 14 is instead stably fixed to the tubular shaft, axially with respect to the electric machine 2, in a position proximal to the second end SS of the drive shaft. Based on this construction configuration, the tubular shaft 5 can be releasably connected to the electric machine 2, so as to interrupt the exchange of torque between the shaft and the electric machine when desired. In particular, when the drive shaft 18 and the tubular shaft 5 are disconnected, each is free to rotate with respect to the other.

The additional tubular shaft 5 is instead stably connected to the input port of the reduction unit, in particular connected in torque transmission to the solar 7 which in turn is connected to the other components inside the casing **1.** The parking wheel can be locked in use to the casing 1 in a releasable manner, by means of a locking device on board the same (not illustrated). For example, this wheel is toothed and the locking device is a mobile insert or cursor rigidly fixed to the casing 1, which can be inserted radially between the teeth of the wheel to block its rotation. In this way, when the parking wheel 14 is constrained to the casing 1, the rotation of the drive shaft 18 is blocked and therefore, as can be understood, the exchange of torque with the first and second axle shafts, in both directions of rotation. The mounting arrangement of the parking wheel 14 is particularly advantageous because when the parking wheel is constrained to the casing 1, a reduced load acts on it thanks to the connection of the tubular shaft 5 with the sun gear 7 which, due to its construction configuration, transmits a lower output torque than the input torque to the reduction unit, i.e. coming from the half-shafts. Therefore, when the vehicle is stationary, a reduced load acts on the parking wheel which results in a lower load acting on the locking device and therefore a lower stress on the same against unlocking, to the benefit of a significant reduction in the robustness, size and weight of the parking lock system. It should be noted that it is possible to provide between the electric machine and the differential, as an alternative to the epicyclic reduction unit 6, any type of coaxial type reduction unit, such as for example a simple epicyclic coaxial reduction unit, multiple epicyclic systems arranged in series, single-speed reduction units with one or more speeds according to the coupling architectures known to experts in the sector.

Furthermore, to counteract unwanted stresses on the parking wheel generated by dynamic effects due to inertias at play during vehicle parking operations, e.g. during the ratcheting of the parking wheel locking device when the latter is engaged while the vehicle is in motion, resulting in an operating condition also known as 'ratcheting', a torsional damper KK may be provided between the parking wheel 14 and the input port of the reduction gear. In particular, such a device is configured to limit, dampen or interrupt the inertial interaction and therefore the over-torques that may be exchanged between the parking system and the electric machine 2, thus avoiding excessive stress and/or breakage of the parking system components due to the resulting dynamic loads. For example, such a device may comprise (torsional) torque limiting joints in any known form, e.g. with friction discs and load springs, with springs and cam/toothed profiles, torque threshold disconnectors of any type and of passive or controlled type, etc.**,** or damping joints, e.g**.** with torsional springs, axial, by means of any sufficiently elastic element or by making the crankshaft itself a torsional damper by means of windows or calibrated shaft sections such as to increase the torsional elasticity of the crankshaft. It should be noted that the presence or absence of the torsional damper KK is linked to the inertias involved and to the control strategies, to the performance of the electric machine 2 with respect to the engagement and disengagement maneuvers of the parking system and more generally to the safety strategies in the event of failure of the transmission and/or vehicle control systems. According to a further aspect of the present invention, the axle comprises a lubrication system for the differential 10 and/or the reduction unit 6, and in which at least a portion of the first half-shaft 3 defines a duct of the lubrication system, connected by means of a rotating hydraulic joint to a remaining part of the lubrication system, preferably in a position proximal to the second end SS. Therefore, the first half-shaft 3 may comprise two coaxial portions, and in which a first portion 3a is rigidly connected to said differential, and therefore defined as a "differential portion" and a second portion 3b, defined as a "wheel portion" because it can be operationally connected to a vehicle wheel W1, and in which said first portion defines a duct of the lubrication system indicated above. The first portion 3a has a longitudinal end 15 preferably arranged inside the hole of the second flanged cover and is engaged with a bearing mounted in this hole to rotationally support the first half-shaft 3. In particular, on this longitudinal end 15 an inlet port 16 of the lubrication duct is made which extends in use through the first portion of the half-shaft until it reaches the end of the same connected to the differential bevel gear 10, on which at least one outlet port 17 is made. In use, the lubrication line L carries a lubricating fluid, e.g. oil, to the differential and/or to the reduction unit, and this feature provides greater lubrication to them without having to make design or size changes to the other components mounted inside the crankcase 1 in order to prepare the lubrication line. The lubrication line L can also be connected to a lubricating fluid tank of the vehicle, for example through a port made on the crankcase 1 or it can be connected to the delivery line of an oil pump integrated in or fixed on the crankcase of the axle itself. Advantageously, it is possible to disconnect the electric machine from the axle, when the axle is driven, for example in a hybrid or electric vehicle, in order to limit losses due to eddy currents or excitation induced in the stator winding or by the mechanical inertia of the rotor of the electric machine itself.

The positioning of the tubular shaft 5 in the drive shaft 18 does not involve an increase in overall dimensions, furthermore, as described below, the interlocking system between the tubular shaft 5 and the drive shaft 18 is arranged in a position, similar to the block 14, convenient, i.e. without additional components resulting in an optimization of the spaces.

The resistant load acting on the parking wheel 14 is thus given by that transmitted by the sun gear 7, i.e. coming from the first and second half-shafts, but advantageously reduced by the reduction ratio of the transmission 6. However, to provide propulsion to the wheels W1, W2, it is necessary to connect the tubular shaft 5 to the electric machine 2 in torque transmission. To achieve this result, a connection device 19 can be provided inside the casing 1, configured to block the rotation, and therefore the transmission of torque, of the drive shaft 18 and the tubular shaft 5. For example, on board the tubular shaft 5 and the drive shaft 18, a first and a second engagement member 20, 21 can be rigidly fixed to rotation respectively, preferably facing each other and arranged axially between the parking wheel 14 and the electric machine 2.

The engagement members are preferably in the form of two parallel gear wheels and the connection device consists of a sliding sleeve that, by sliding axially, connects the two gear wheels in rotation. It is clear from the figures that this reversible connection is of the ON/OFF type and does not introduce any variation in the transmission ratio.

It can also be seen that the tubular shaft 5 is connected to the input of the epicyclic gear train and not to the differential. In fact, according to the present invention, the differential is always driven via the epicyclic gear train.

Advantageously, the joint 19 can therefore disconnect the parking wheel 14 from the electric machine 2 during the engagement and ratcheting operations of the parking, thus limiting the dynamic over-torques that may arise from the inertias at play during the parking operations. Preferably, for further protection of the parking system, the torsional damper KK can also be provided in this embodiment, which can be arranged in different alternative configurations. For example, the torsional damper can be operatively interposed between the parking wheel 14 and the input port of the reducer, for example, it can be associated or integrated with/in the tubular shaft 5, but alternative solutions can be envisaged in which this device is associated or integrated with/in the first clutch member 20 or with/in the second clutch member 21.

The clutch members can be with frontal teeth, generally called dog clutch, radial with splines, with interposed synchro ring/s or can define a friction joint. Furthermore, the connecting device 19, preferably in the form of a sliding sleeve, can comprise an insert/slider interposed between the first and second coupling members 20, 21 and movable parallel to the X-axis between a connection position, so as to connect in torque transmission such coupling members 20, 21, and therefore the electric machine 2 to the tubular shaft 5.

Furthermore, this connecting device 19 is movable in a disconnected condition, so that the first and second coupling members 20, 21 are mutually disconnected and independent. As can be understood, such disengagement also causes the interruption of the torque transfer between the electric machine 2 and the tubular shaft 5. This connection device 19 can be of the mono or bistable controlled type normally open or normally closed and therefore creates the connection or disconnection of the electric machine 2 to the transmission and to the parking wheel 14.

Preferably, the electric axle described above can further comprise a differential locking device 22, arranged to operate on the second half-shaft 4, so as to make said second half-shaft integral with the train carrier and with the differential box 11. This parking lock system 22 can be external to the compartment V2 or be made inside the compartment 22.

Optionally, on each of said first and second half-shafts 3, 4 a further reduction unit 23 can be arranged, e.g. a coaxial epicyclic wheel hub reducer, so as to further increase the reduction ratio between the electric machine 2 and the vehicle wheels W1, W2 and therefore the level of torque available to them.

Preferably, the lubrication system comprises a plurality of lubrication branches extending radially starting from the first portion 3a of the axle shaft, until reaching at least one housing point of said differential and/or said reduction unit.

Preferably, the differential 10 comprises at least one satellite arranged to be driven in rotation by the train carrier 11 and meshing with a first and a second bevel gear carried by a respective between the first and second half-shafts 3, 4.

The solution described above can be applied to any vehicle equipped with a drive axle and preferably to a medium or light industrial / commercial vehicle (MCV/LCV = medium commercial vehicles or light commercial vehicles).

## Claims

1. Electric axle (A1) for an on-axis vehicle, comprising:
- a casing (1), in which are housed
- an electric machine (2), comprising a drive shaft (18) having a tubular shape and having a first end (PS) and a second end (SS) opposite to the first one, wherein the first and second ends project with respect to a rotor of the electric machine,
- a reduction unit (6) comprising an input port (7) connectable in torque transmission to the drive shaft (18), the reduction unit being arranged in an axial position with respect to the electric machine (2), in a position proximal to the first end (PS),
- a differential (10) at least partially nested in the reduction unit (6),
- a first and a second half-shaft (3, 4) coaxial with each other and operationally connected to said differential (10), wherein said first half-shaft (3) is nested in the drive shaft (18),
- a second tubular shaft (5), operatively interposed between said drive shaft (18) and said first half-shaft (3), wherein the second tubular shaft (5) has a first end stably fixed to said first input port (7) of the reduction unit (6), and a second end, opposite to the first one, operatively connectable with said drive shaft (18).

2. Axle according to claim 1, comprising a parking lock system (14) configured to reversibly constrain said input port (7) of the reduction unit (6) to said casing, wherein the parking lock system is arranged co-axially with the electric machine (2), in a proximal position to said second end (SS) of the drive shaft and preferably comprising a torsional damper (KK) operatively arranged between the parking lock system (14) and said first port of the reduction unit (6).

3. Axle according to claim 2, wherein said parking lock system comprises a parking wheel fixed to the second tubular shaft (5).

4. Axle according to any of the preceding claims, wherein said second tubular shaft (5) and drive shaft are interconnectable by means of a joint (20), arranged in a proximal position to said second end (SS) of the drive shaft.

5. Axle according to any of the preceding claims, wherein said reduction unit (6) is of the epicyclic type and comprises a sun gear (7) defining said first port (7), a planetary gear comprising
- at least one stepped satellite (8c) formed by a first wheel (8a) and a second wheel (8b), wherein said first wheel (8a) is arranged to mesh with said sun gear (7) and said second wheel (8b) is arranged to mesh with a fixed crown (9) integral with the casing (1) and
- a train carrier (11) configured to rotate said at least one satellite, and being integral with an input port (10a) of the differential (10).

6. Axle according to any of the preceding claims, further comprising a differential locking device (22), arranged to operate on the second half-shaft (4), so as to make said second half-shaft integral with said differential input port (10a).

7. Axle according to any of the preceding claims, wherein the axle comprises a lubrication system for the differential (10) and/or the reduction unit (6) and wherein at least a portion of said first half-shaft (3) has a tubular shape and defines a duct (L) of the lubrication system, connected by means of a rotating hydraulic joint (16) to a remaining part of the lubrication system.

8. Axle according to claim 7, wherein said rotating hydraulic joint (18) is arranged in a proximal position to said second end (SS).

9. Axle according to any of the preceding claims, wherein on each of said first and second half-shafts (3, 4) a related further reduction unit (23) is arranged.

10. Axle according to claim 9 when it depends on claim 8, wherein the first half-shaft (3) comprises two coaxial portions (3a, 3b) between them, identifying a wheel portion (3b) and a differential portion (3a), and wherein at least a part of the differential portion (3a) defines said lubrication system conduit (L).

11. Axle according to claim 10, wherein said lubrication system comprises a plurality of lubrication branches extending radially starting from said first portion (3a) of the first half-shaft (3), until reaching at least one housing point of said differential (10) and/or said reduction unit (6).

12. Axle according to any of the preceding claims, wherein said differential (10) comprises at least one satellite arranged to be driven in rotation by a train carrier (11) and meshing with a first and a second bevel gear carried by a respective of said first (3) and second half-shaft (4).

13. Vehicle equipped with an axle according to any of the preceding claims.
